# EUROPÄISCHE PATENTANMELDUNG

(11) **EP 1 309 076 A2**
(43) Veröffentlichungstag der Anmeldung: **07.05.2003**
(21) Anmeldenummer: 02023480.3
(22) Anmeldetag: 21.10.2002
(51) Int. Cl.: H02M 3/07

(54) **Netzteil für elektronische Baugruppe**

(30) Priorität: 06.11.2001 DE 20118010 U
(71) Anmelder: Liebherr-Hausgeräte Ochsenhausen GmbH, 88416 Ochsenhausen (DE)
(72) Erfinder: Gerner, Herbert, 88416 Erlenmoos (DE)
(74) Vertreter: Gossel, Hans K., Dipl.-Ing.

(57) **Zusammenfassung**

Die Erfindung betrifft ein kapazitives Netzteil für eine elektronische Baugruppe, mit zwei oder mehreren Energieversorgungspfaden mit jeweils zumindest einem kapazitiven Element zur Bereitstellung unterschiedlicher Energiemengen für unterschiedliche, durch die elektronische Baugruppe hervorgerufene Energiebedarfszustände, eine elektronische Baugruppe mit einem solchen Netzteil und Systeme mit einer solchen elektronischen Baugruppe bzw. einem solchen kapazitiven Netzteil.

## Beschreibung

Die Erfindung betrifft ein kapazitives Netzteil für eine elektronische Baugruppe, eine elektronische Baugruppe, insbesondere zur Steuerung von Kühl- und/oder Gefriergeräten, mit Steuerelementen zur Steuerung eines Netzteiles und ein System aus einem kapazitiven Netzteil und einer elektronischen Baugruppe, insbesondere zur Steuerung von Kühl- und/oder Gefriergeräten.

Zur Energieversorgung von elektronischen Baugruppen werden vielfach kapazitive Netzteile eingesetzt, die eine kostengünstige Versorgung mit kleinen Leistungen ermöglichen. Bekannte Netzteile sind dabei immer auf den maximalen Belastungsfall, d.h. Energiebedarf der Elektronik ausgelegt. Ist der maximale Belastungsfall nicht gegeben, so wird die Energie schaltungsbedingt dem Netz dennoch entnommen und im Netzteil in Wärme umgewandelt. Dies hat einen unnötigen Energieverbrauch zur Folge und kann, im speziellen z. B. bei der Anwendung für Kühlund/oder Gefriergeräten, zu einer unerwünschten Erwärmung führen.

Aufgabe der vorliegenden Erfindung ist es, ein Netzteil, eine elektronische Baugruppe bzw. ein System aus einem Netzteil und einer elektronischen Baugruppe anzugeben, mit denen ein unnötiger Energieverbrauch vermieden werden kann.

Diese Aufgabe wird erfindungsgemäß mit einem Netzteil mit den Merkmalen des Anspruches 1, einer elektronischen Baugruppe mit den Merkmalen des Anspruches 7 bzw. einem System mit den Merkmalen des Anspruches 9 oder 10 gelöst.

Ein erfindungsgemäßes kapazitives Netzteil weist zwei oder mehr Energieversorgungspfade auf, die jeweils mit einem kapazitiven Element ausgestattet sind. Die Energieversorgungspfade dienen zur Bereitstellung unterschiedlicher Energiemengen für unterschiedliche, durch die elektronische Baugruppe hervorgerufene Energiebedarfszustände.

Das erfindungsgemäße Netzteil ist also für verschiedene Belastungsfälle ausgerüstet. Je nach Energiebedarf der Elektronik, der z. B. durch zusätzliche Operationen notwendig werden kann, können z. B. mehrere Energieversorgungspfade verwendet werden, um eine größere Energiemenge vom Netzteil an die elektronische Baugruppe liefern zu können. Die an die elektronische Baugruppe gelieferte Energiemenge kann also optimal an den aktuellen Energiebedarf angepaßt werden. Das Netzteil wird also nicht immer mit der maximalen Leistung betrieben, die für den maximalen Belastungsfall durch die elektronische Baugruppe bestimmt ist. Unnötiger Energieverbrauch und unnötige Wärmeerzeugung werden also vermieden.

Die unterschiedlichen Energieversorgungspfade können mit entsprechenden Schaltelementen ausgerüstet sein, die z. B. von der elektronischen Baugruppe zuoder abgeschaltet werden. Die Energieversorgungspfade können zur Lieferung verschieden hoher Energiemengen ausgelegt sein, so daß durch Auswahl des entsprechenden Energieversorgungspfades die Energiemenge bestimmt wird, die an die elektronische Baugruppe geliefert wird.

Besonders vorteilhaft ist es, wenn die für die Grundlast benötigte Energie, welche immer erforderlich ist, ein permanent geschalteter Energieversorgungspfad vorgesehen ist. Wird von der Elektronik aus irgendeinem Grund mehr Energie benötigt, so wird ein weiterer Energieversorgungspfad mit einem in Serie zu dessen kapazitivem Element geschalteten Schaltelement hinzugeschaltet. Auf diese Weise sind zwei Energieversorgungspfade zugeschaltet und die an die elektronische Baugruppe gelieferte Energie ist höher. Auf diese Weise können selbstverständlich je nach Bedarf auch mehrere Energieversorgungspfade hinzugeschaltet werden.

Bei einer anderen vorteilhaften Ausgestaltung weist zumindest einer der Energieversorgungspfade zwei in Serie geschaltete kapazitive Elemente auf. Zumindest eines dieser kapazitiven Elemente kann mit Hilfe eines parallel geschalteten Schaltelementes kurzgeschlossen werden. So entsteht ein anderer Energieversorgungspfad. Durch die Überbrückung des entsprechenden kapazitiven Elementes erhöht sich die der elektronischen Baugruppe zur Verfügung gestellte Energie, da anstatt der Reihenschaltung zweier kapazitiver Elemente nur noch ein kapazitives Element wirksam ist. Auch derartig ausgestaltete Schaltungen mit in Serie zueinander geschalteten kapazitiven Elementen können mehrfach vorgesehen sein, um die Flexibilität des Netzteiles zu erhöhen.

Ebenso können ein oder mehr Energieversorgungspfade mit in Serie geschalteten kapazitiven Elementen, von denen zumindest jeweils eines überbrückbar ist, und andere Energieversorgungspfade, bei denen ein Schaltelement in Serie zu einen kapazitiven Element vorgesehen ist, in einem Netzteil realisiert werden.

Bei einer vorteilhaften Weiterbildung ist zusätzlich zu der elektronischen Baugruppe ein weiterer elektrischer Verbraucher vorgesehen, der in einem Stromkreis angeordnet ist, der das zu dem kapazitiven Element eines Energieversorgungspfades in Serie geschaltete Schaltelement umfaßt, so daß beim Zuschalten dieses Energieversorgungspfades mit Hilfe des entsprechenden Schaltelementes der weitere Verbraucher mit Energie versorgt wird, wenn das Netzteil in Betrieb ist. Mit einem Schaltelement kann dazu z. B. eine Beleuchtung gleichzeitig mit dem Energieversorgungspfad zur Erhöhung der Energiezufuhr an die elektronische Baugruppe geschaltet werden. Andererseits ist es mit einer solchen vorteilhaften Schaltungsanordnung möglich, z. B. den erhöhten Energiebedarf der elektronischen Baugruppe, der gerade dadurch ausgelöst wird, daß eine Anforderung zum Betreiben eines zusätzlichen Verbrauchers durch die elektronische Baugruppe bearbeitet werden soll, durch Schalten des Schaltelementes zur Verfügung zu stellen, das auch das Zuschalten des entsprechenden zusätzlichen elektrischen Verbrauchers bewirkt.

Vorteilhafterweise weist das Netzteil ein Pufferelement auf, das eine Energiemenge aufbauen und speichern kann, die zum Schalten zumindest eines Schaltelementes geeignet ist. Dieses Pufferelement ist mit dem entsprechenden Schaltelement derart verbunden, daß es auf ein Signal der elektronischen Baugruppe hin die aufgebaute bzw. gespeicherte Energie zur Betätigung des Schaltelementes an dieses abgibt. Wenn eine Anforderung zum Bereitstellen eines zusätzlichen Energieversorgungspfades vorliegt, ist mit einem solchen Pufferelement keine zusätzliche Energie zum Schalten des Schaltelementes notwendig.

Eine elektronische Baugruppe mit den Merkmalen des Anspruches 7 weist Steuerelemente auf, mit deren Hilfe die Schaltelemente eines erfindungsgemäßen Netzteiles angesteuert werden können. Die Steuerelemente sind derart ausgestaltet, daß bei sich änderndem Energiebedarf der elektronischen Baugruppe ein Signal abgegeben wird, das zum Schalten des Schaltelementes bzw. der Schaltelemente geeignet ist.

Bei einer solchen elektronischen Baugruppe kann ein Pufferelement vorgesehen sein, das zum Aufbau und zur Speicherung einer Energiemenge geeignet ist, die zum Schalten zumindest eines der Schaltelemente des Netzteiles geeignet ist. Mit Hilfe einer solchen besonderen Ausführungsform der elektronischen Baugruppe ist die Steuerung eines Netzteiles möglich, bei dem zwar die Schaltelemente, nicht jedoch das Pufferelement im Netzteil vorgesehen sind.

Unabhängiger Schutz wird auch für ein System aus einer solchen erfindungsgemäßen elektronischen Baugruppe und einem erfindungsgemäßen Netzteil mit Schaltelementen zum Hinzuschalten von unterschiedlichen Energieversorgungspfaden beansprucht.

Die Erfindung umfaßt ebenfalls ein System aus einer elektronischen Baugruppe und einem kapazitiven Netzteil, bei dem die elektronische Baugruppe ein oder mehrere Schaltelemente umfaßt, die mit dem Netzteil derart verbindbar sind, daß sie Energieversorgungspfade des Netzteiles hinzu- oder abschalten können. Bei einem solchen erfindungsgemäßen System sind also die Schaltelemente innerhalb der elektronischen Baugruppe vorgesehen und müssen nicht im Netzteil realisiert werden. Die Vorteile eines solchen Systemes mit mehreren unterschiedlichen Energieversorgungspfaden entsprechen den oben bereits geschilderten Vorteilen für ein erfindungsgemäßes kapazitives Netzteil.

Ausführungsformen der Erfindung werden anhand beiliegender Figuren im Detail erläutert. Dabei zeigt
- Figur 1: einen Schaltplan eines erfindungsgemäßen kapazitiven Netzteiles im Betrieb mit einer elektronischen Baugruppe und
- Figur 2: eine alternative Schaltung für den in Figur 1 strichliniert eingefaßten Bereich.

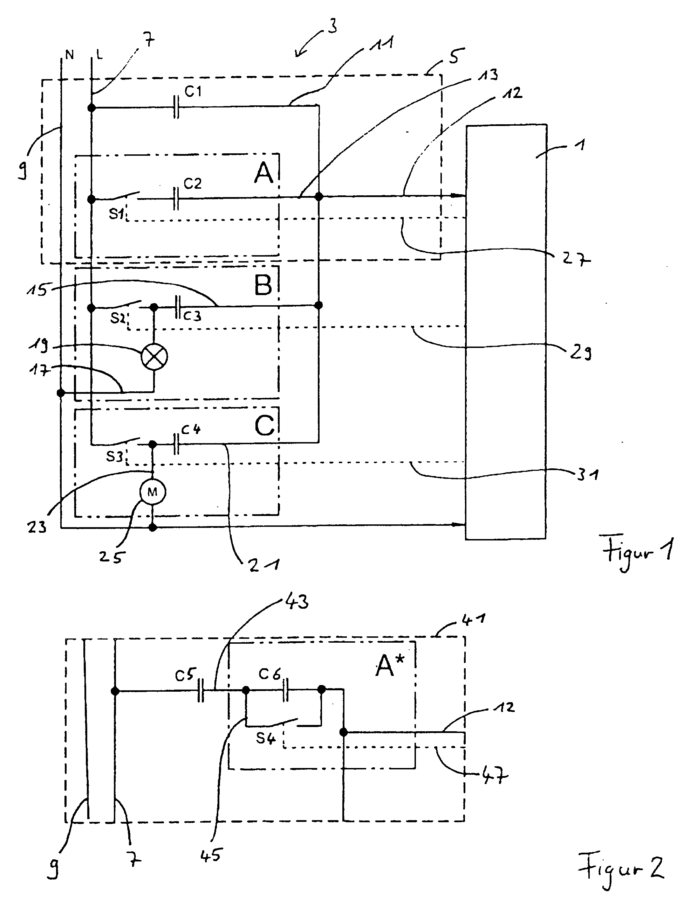

Figur 1 zeigt den Schaltplan eines erfindungsgemäßen kapazitiven Netzgerätes 3 im Betrieb mit einem elektronischen Bauteil 1. 7 und 9 bezeichnen Zuleitungen an das Netzgerät, über deren Anschlüsse N, L eine externe Stromversorgung angeschlossen wird. Eine elektrische Verbindung 12 dient der Verbindung mit der elektronischen Baugruppe 1. 11 bezeichnet einen permanent geschalteten Energieversorgungspfad mit einem kapazitiven Element C1. 13 bezeichnet einen zweiten Energieversorgungspfad mit einem kapazitiven Element C2 und einem dazu in Serie geschalteten Schaltelement S1. Die Steuerung dieses Schaltelementes S1 wird von der elektronischen Baugruppe 1 über die Signalleitung 27 in an sich bekannter Weise ermöglicht. 15 bezeichnet einen dritten Energieversorgungspfad mit einem kapazitiven Element C3. Dazu in Serie geschaltet ist ein Schaltelement S2, das mit der elektronischen Baugruppe über eine Signalleitung 29 verbunden ist. 19 bezeichnet beispielhaft eine Glühbirne, die über einen Stromkreis 17 mit den Versorgungsleitungen 7 und 9 verbunden ist und ebenfalls über das Schaltelement S2 geschaltet werden kann.

21 bezeichnet einen vierten Energieversorgungspfad mit einem kapazitiven Element C4. Dazu in Serie geschaltet ist ein Schaltelement S3, das über eine Signalleitung 31 mit der elektronischen Baugruppe 1 verbunden ist. 25 bezeichnet ein Motorrelais M, das in einem Stromkreis 23 mit den Versorgungsleitungen des Netzteiles 7 und 9 verbunden ist. Die Schaltung ist derart, daß mit dem Schaltelement S3 auch die Stromversorgung des Motorrelais gesteuert werden kann.

Nur zur Vereinfachung der Darstellung sind in Figur 1 einzelne Abschnitte A, B, C durch strichpunktierte Linien angedeutet, die im gezeigten Beispiel dem zweiten, dem dritten und dem vierten Energieversorgungspfad entsprechen.

Die Anordnung der Figur 1 eignet sich z. B. zur Energieversorgung einer elektronischen Baugruppe 1, die bei der Steuerung eines Kühl- und/oder Gefriergerätes eingesetzt wird.

Die für die Grundlast der elektronischen Baugruppe 1 benötigte Energie, welche immer erforderlich ist, wird über den Kondensator C1 und die Leitung 11, 12 bereitgestellt. Wird von der elektronischen Baugruppe 1 aus irgendeinem Grund mehr Energie benötigt, so wird der Schalter S1 durch die Elektronik über die Signalleitung 27 geschlossen und somit über den Kondensator C2 ein zweiter Energieversorgungspfad 13 hinzugeschaltet. So wird der gestiegene Energiebedarf der elektronischen Baugruppe 1 berücksichtigt.

Die Energie, welche zum Einschalten des Schaltelementes S1 erforderlich ist, kann über einen längeren Zeitraum in einem nicht gezeigten Pufferelement aufgebaut werden, um so den Energieverbrauch im Normalbetrieb minimal zu halten. Ein solches Pufferelement kann sich entweder in der elektronischen Baugruppe 1 befinden oder im Netzteil 3 selber. Befindet sich das Pufferelement in der elektronischen Baugruppe 1, wird über die Signalleitung 27, 29, 31 die Energie zum Schalten des jeweiligen Schaltelementes zur Verfügung gestellt. Ansonsten dienen die Signalleitungen 27, 29, 31 zur Übermittlung des Signales an ein Pufferelement zum Freigeben der Energie an das jeweilige Schaltelement.

Abschnitt B zeigt eine entsprechende Anordnung im Zusammenhang z. B. mit der Innenbeleuchtung und/oder der Temperaturanzeige eines Kühl- oder Gefriergerätes. Die in dem z. B. in der elektronischen Baugruppe 1 vorgesehenen Pufferelement aufgebaute Pufferenergie reicht aus, um das Schaltelement S2 für die Innenbeleuchtung 19 einzuschalten. Hierdurch wird sowohl die Beleuchtung als auch der weitere Energieversorgungspfad 15 hinzugeschaltet. Die elektronische Baugruppe 1 verfügt also über ausreichend Leistung, um den Schaltzustand des Schaltelementes S2 der Innenbeleuchtung 19 aufrechtzuerhalten und ggf. noch eine Temperaturanzeige mit zu versorgen.

Abschnitt C zeigt eine entsprechende Anordnung im Zusammenhang mit dem Kompressor eines Kühl- und/oder Gefriergerätes. Bei einer solchen Anordnung muß, solange der Kompressor abgeschaltet ist, lediglich die Energie, die zum Einschalten des Kompressorschaltelementes S3 erforderlich ist, bereit gehalten werden. Die Energie um den Zustand aufrechtzuerhalten, wird dann durch den zugeschalteten weiteren Energieversorgungspfad 21 bereitgestellt.

Figur 2 zeigt einen alternativen Aufbau für den in Figur 1 mit dem gestrichelten Rahmen 5 bezeichneten Teil, wobei der gestrichelt eingezeichnete Rahmen 41 der Figur 2 dem gestrichelten Rahmen 5 der Figur 1 entspricht. Figur 2 zeigt eine andere Anordnung zur Verwirklichung mehrerer Energieversorgungspfade. 43 bezeichnet einen ersten Energieversorgungspfad mit den kapazitiven Elementen C5 und C6. 45 bezeichnet einen parallel geschalteten Stromkreis mit einem Schaltelement S4, mit dessen Hilfe der Kondensator C6 überbrückt werden kann. Wiederum nur zur vereinfachten Darstellung ist die Anordnung der zwei möglichen Energieversorgungspfade der Figur 2 mit A* strichpunktiert zusammengefaßt.

Durch Überbrücken des Kondensators C6 mit Hilfe des Schalters S4 erhöht sich die der elektronischen Baugruppe 1 zur Verfügung gestellte Energie, da anstatt der Reihenschaltung von C5 und C6 nur der Kondensator C5 wirksam ist.

Im Normalbetrieb ist der Schalter S4 also geöffnet. Steigt aus irgendeinem Grund der Energiebedarf der elektronischen Baugruppe 1, so sendet diese über die Signalleitung 47 ein Signal an den Schalter S4, so daß sich dieser, ggf. unter Einsatz der in einem nicht gezeigten Pufferelement gespeicherten Energie, schließt. Die Energieversorgung wird also nur noch von dem Kondensator C5 beeinflußt und es entsteht ein zweiter Energieversorgungspfad 43, 45 unter Umgehung des Kondensators C6. Auf diese Weise wird eine höhere Energie zur Verfügung gestellt und der gestiegene Energiebedarf der elektronischen Baugruppe 1 berücksichtigt.

Der Abschnitt A* stellt bereits zwei unterschiedliche mögliche Energieversorgungspfade zur Verfügung und ermöglicht daher die Verwirklichung der Erfindung. Selbstverständlich können zusätzlich entsprechende Abschnitte B und C vorgesehen sein oder mehrere Abschnitte A*, um eine flexible Gestaltung der Energieversorgung der elektronischen Baugruppe 1 zu gewährleisten.

Die Kondensatoren C1, C2, C3, C4 können extern angeordnet sein oder auf einer entsprechenden Elektronik bestückt sein.

Alternativ zu den im Netzteil 3 angeordneten Schaltelementen S1, S2, S3 oder S4 können auch ohnehin auf der elektronischen Baugruppe 1 vorhandene Schaltelemente für das Hinzuschalten eines weiteren Energieversorgungspfades verwendet werden. Die elektronische Baugruppe 1 muß hierzu lediglich die Energie zum Einschalten des jeweiligen Schaltelementes aufbringen. Durch den dann hinzugeschalteten Energieversorgungspfad ist der weitere Betrieb des entsprechenden Schaltelementes gewährleistet. Die Energie, welche zum Einschalten erforderlich ist, kann wiederum über einen längeren Zeitraum in einem Pufferelement, welches sich in der elektronischen Baugruppe 1 befindet, aufgebaut werden, um so den Energieverbrauch im Normalbetrieb möglichst minimal zu halten.

Mit dem erfindungsgemäßen kapazitiven Netzteil bzw. dem erfindungsgemäßen System und/oder der erfindungsgemäßen elektronischen Baugruppe ist es also möglich, die Energieversorgung in Abhängigkeit des Energiebedarfes der elektronischen Baugruppe 1 zu regeln. Nur wenn tatsächlich ein höherer Energiebedarf vorliegt, werden ein oder mehrere Energieversorgungspfade zusätzlich aktiviert, um diesen Energiebedarf zu decken. Bei niedrigem Energiebedarf sind weniger oder nur ein Energieversorgungspfad in Betrieb, so daß nur wenig Energie an die elektronische Baugruppe 1 geliefert wird. So wird ein unnötiger Energieverbrauch verhindert und eine daraus resultierende Wärmeerzeugung verringert.

## Patentansprüche

1. Kapazitives Netzteil für eine elektronische Baugruppe (1), mit zwei oder mehreren Energieversorgungspfaden (11, 13, 15, 21, 43) mit jeweils zumindest einem kapazitiven Element (C1, C2, C3, C4, C5, C6) zur Bereitstellung unterschiedlicher Energiemengen für unterschiedliche, durch die elektronische Baugruppe (1) hervorgerufene Energiebedarfszustände.

2. Kapazitives Netzteil nach Anspruch 1, bei dem ein Energieversorgungspfad (11) bei in Betrieb befindlichem Netzteil (3) permanent geschaltet ist und zumindest ein weiterer Energieversorgungspfad (13, 15, 21) mit einem in Serie zu dem kapazitiven Element (C2, C3, C4) des weiteren Energieversorgungspfades (13, 15, 21) geschalteten Schaltelementes (S1, S2, S3) hinzuschaltbar ist.

3. Kapazitives Netzteil nach Anspruch 1 mit einem Energieversorgungspfad (43) mit zumindest zwei in Serie geschalteten kapazitiven Elementen (C5, C6), wobei zumindest zu einem kapazitiven Element (C6) ein Schaltelement (S4) parallel geschaltet ist, mit dem dieses kapazitive Element (C6) kurzgeschlossen werden kann, um einen zweiten Energieversorgungspfad zu bilden.

4. Kapazitives Netzteil nach Anspruch 3 mit zumindest einem weiteren Energieversorgungspfad (15, 21) mit einem in Serie zu dem kapazitiven Element (C3, C4) des weiteren Energieversorgungspfades (15, 21) geschalteten Schaltelement.

5. Kapazitives Netzteil nach einem der Ansprüche 2 oder 4 mit zumindest einem zusätzlichen elektrischen Verbraucher (19, 25), insbesondere einem Relais, einer Temperaturanzeige, einer Lichtquelle oder einer Kompressorsteuerung, zusätzlich zur elektronischen Baugruppe (1), der in einem Stromkreis (17, 23) angeordnet ist, der das zu dem kapazitiven Element (C3, C4) eines Energieversorgungspfades (15, 21) in Serie geschaltete Schaltelement (S2, S3) umfaßt, so daß beim Zuschalten dieses Energieversorgungspfades (15, 21) mit Hilfe des entsprechenden Schaltelementes (S2, S3) der weitere Verbraucher (19, 25) mit Energie versorgt wird, wenn das Netzteil (3) im Betrieb ist.

6. Kapazitives Netzteil nach einem der Ansprüche 2 bis 5 mit zumindest einem Pufferelement zum Aufbau und zur Speicherung einer Energiemenge, die zum Schalten zumindest eines der Schaltelemente (S1, S2, S3, S4) geeignet ist, wobei das Pufferelement mit dem Schaltelement derart verbunden ist, daß es auf ein Signal der elektronischen Baugruppe (1) hin die aufgebaute bzw. gespeicherte Energie zur Betätigung des Schaltelementes (S1, S2, S3, S4) an dieses abgibt.

7. Elektronische Baugruppe, insbesondere zur Steuerung von Kühl- und/oder Gefriergeräten, mit Steuerelementen zur Steuerung des Schaltelementes bzw. der Schaltelemente (S1, S2, S3, S4) eines Netzteiles gemäß einem der Ansprüche 2 bis 6, wobei die Steuerelemente derart ausgestaltet sind, daß sie bei sich änderndem Energiebedarf der elektronischen Baugruppe (1) ein Signal abgeben, das zur Steuerung des Schaltelementes bzw. der Schaltelemente (S1, S2, S3, S4) des Netzteiles (3) geeignet ist.

8. Elektronische Baugruppe nach Anspruch 7 mit einem Pufferelement zum Aufbau und zur Speicherung einer Energiemenge, die zum Schalten zumindest eines der Schaltelemente (S1, S2, S3, S4) des Netzteiles (3) geeignet ist.

9. System aus einer elektronischen Baugruppe (1) gemäß einem der Ansprüche 7 oder 8 und einem Netzteil (3) gemäß einem der Ansprüche 2 bis 6.

10. System aus einem kapazitiven Netzteil gemäß Anspruch 1 und einer elektronischen Baugruppe, insbesondere zur Steuerung von Kühl- und/oder Gefriergeräten.

11. System nach Anspruch 10, bei dem zumindest ein Energieversorgungspfad des Netzteiles bei im Betrieb befindlichen Netzteil permanent geschaltet ist und die elektronische Baugruppe zumindest ein Schaltelement aufweist, das bei steigendem Energiebedarf der elektronischen Baugruppe geschlossen wird, und eine elektrische Verbindung zwischen dem Schaltelement in der elektronischen Baugruppe und einem weiteren Energieversorgungspfad in dem Netzteil derart vorgesehen ist, daß beim Schließen des Schaltelementes in der elektronischen Baugruppe der weitere Energieversorgungspfad zur Versorgung der elektronischen Baugruppe hinzugeschaltet wird.

12. System nach Anspruch 10, mit
einem Energieversorgungspfad des Netzteiles mit zumindest zwei in Serie geschalteten kapazitiven Elementen,
einem Schaltelement innerhalb der elektronischen Baugruppe, und
einer elektrischen Verbindung zwischen dem Schaltelement und zumindest einem der kapazitiven Elemente derart, daß das Schaltelement parallel zu dem kapazitiven Element geschaltet ist.

13. System nach Anspruch 12, bei dem das Netzteil einen weiteren Energieversorgungspfad und die elektronische Baugruppe ein weiteres Schaltelement aufweisen, die derart miteinander verbunden sind, daß das Schaltelement in der elektronischen Baugruppe elektrisch mit dem kapazitiven Element des weiteren Energieversorgungspfades in Serie geschaltet ist.

14. System nach einem der Ansprüche 11 bis 13 mit zumindest einem Pufferelement in der elektronischen Baugruppe oder dem Netzteil zum Aufbau und zur Speicherung einer Energiemenge, die zum Schalten zumindest eines der Schaltelemente der elektronischen Baugruppe geeignet ist, wobei das Pufferelement mit dem Schaltelement derart verbunden ist, daß es auf ein Signal der elektronischen Baugruppe hin die aufgebaute bzw. gespeicherte Energie zur Betätigung des Schaltelementes an dieses abgibt.
